(19) Europäisches Patentamt
European Patent Office
Office européen des brevets

(11) **EP 4 723 667 A1**

(12) **EUROPEAN PATENT APPLICATION**
published in accordance with Art. 153(4) EPC

(43) Date of publication:
**08.04.2026 Bulletin 2026/15**

(21) Application number: **24841921.0**

(22) Date of filing: **22.02.2024**

(51) International Patent Classification (IPC):
**H04Q 11/00** (2006.01)    **H04B 10/079** (2013.01)

(52) Cooperative Patent Classification (CPC):
**H04B 10/079; H04J 14/02; H04Q 11/00**

(86) International application number:
**PCT/CN2024/078121**

(87) International publication number:
**WO 2025/015915 (23.01.2025 Gazette 2025/04)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.07.2023 CN 202310893415**

(71) Applicant: **Huawei Technologies Co., Ltd.**
**Shenzhen, Guangdong 518129 (CN)**

(72) Inventors:
• **HE, Jiale**
**Shenzhen, Guangdong 518129 (CN)**
• **SI, Xiaoshu**
**Shenzhen, Guangdong 518129 (CN)**
• **CHEN, Haicheng**
**Shenzhen, Guangdong 518129 (CN)**

(74) Representative: **Huawei European IPR**
**Huawei Technologies Duesseldorf GmbH**
**Riesstraße 25**
**80992 München (DE)**

(54) **OPTICAL COMMUNICATION NETWORK REGISTRATION METHOD AND APPARATUS, NETWORK DEVICE, AND SYSTEM**

(57) A registration method for an optical communication network, an apparatus, a network device, and a system are disclosed, and the disclosure relates to the field of optical communication technologies. Regardless of whether a sub ONU goes online for the first time or goes online again, a main ONU allocates a registration identifier (ONU ID) to the sub ONU based on prestored SNs of sub ONUs that are to go online. To be specific, the main ONU does not need to open an SN discovery window for the ONU that is to go online, and does not need to interrupt a service of another sub ONU that communicates with the main ONU, implementing registration of the sub ONU with the optical communication network without opening a quiet window, and reducing delay jitter of the optical communication network caused by a registration process of the sub ONU.

FIG. 4

EP 4 723 667 A1

**Description**

This application claims priority to Chinese Patent Application No. 202310893415.5, filed with the China National Intellectual Property Administration on July 19, 2023 and entitled "REGISTRATION METHOD FOR OPTICAL COMMUNICATION NETWORK, APPARATUS, NETWORK DEVICE, AND SYSTEM", which is incorporated herein by reference in its entirety.

**TECHNICAL FIELD**

This application relates to the field of optical communication technologies, and in particular, to a registration method for an optical communication network, an apparatus, a network device, and a system.

**BACKGROUND**

A passive optical network (Passive Optical Network, PON) is an access network based on optical fiber link transmission. There is no electronic device that uses power supply between an optical line terminal (Optical Line Terminal, OLT) and an optical network unit (Optical Network Unit, ONU) in the PON. In the PON, downstream transmission from the OLT to the ONU is in a broadcast manner, and upstream transmission from the ONU to the OLT is in a time division multiple access (Time Division Multiple Access, TDMA) manner. Therefore, in a process of the upstream transmission from the ONU to the OLT, slots occupied by different ONUs cannot overlap because information transmitted in an overlapping slot cannot be correctly received by the OLT. In this case, a slot allocated to the ONU during normal service grant needs to be determined through ranging of the ONU in a registration phase.

In a registration process of the ONU, the OLT delivers a grant instruction, and periodically opens a quiet window for serial number (serial number, SN) discovery (discovery window for short) for the ONU. In a slot corresponding to the discovery window, the ONU sends an SN signal to the OLT. Then, the OLT allocates, based on the received SN signal, a registration identifier to the ONU that is to go online, and opens a quiet window for ranging (ranging window for short). Then, in a slot corresponding to the ranging window, the OLT performs ranging and grant on the ONU that is to go online, to complete the registration process of the ONU. In the slot corresponding to the SN discovery window and the slot corresponding to the ranging window, a service of another ONU connected to the OLT needs to be interrupted. Consequently, in the ONU registration solution, the discovery window is periodically opened, which causes large delay jitter. This brings a challenge to a PON system in an application scenario with a high requirement on delay jitter. To reduce upstream delay jitter caused by the registration process, a more effective registration method for an optical communication network is needed.

**SUMMARY**

This application provides a registration method for an optical communication network, an apparatus, a network device, and a system, to resolve a problem that upstream delay jitter is large in a registration process of the optical communication network, and help improve communication performance of the optical communication network.

According to a first aspect, this application provides a registration method for an optical communication network. The registration method is performed by a second network device, and the second network device stores SNs of network devices that are to go online on the optical communication network. The registration method includes: The second network device obtains a registration identifier of a first network device based on a prestored SN of the first network device. The first network device is one of the network devices that are to go online. The second network device sends the SN of the first network device and the obtained registration identifier to the first network device, and sends a first ranging request packet to the first network device. Finally, the second network device receives a first ranging packet sent by the first network device, and sends a first response packet to the first network device. The first ranging packet carries the registration identifier of the first network device. The first response packet indicates a first equalization delay to be used by the first network device in the optical communication network.

Compared with a related technology in which a main ONU periodically opens an SN discovery window for each sub ONU in a sub ONU discovery phase, in this embodiment, the second network device prestores the SNs of the network devices that are to go online, the second network device can allocate a registration identifier to a first network device based on the stored SNs, and the second network device does not need to open SN discovery windows for these first network devices, avoiding delay jitter caused by SN discovery window opening, and avoiding a service interruption of another first network device in the SN discovery window. This improves communication performance of the optical communication network.

In an optional implementation, after the second network device sends the first response packet to the first network device, if the first network device goes offline from the optical communication network, the registration method provided in this application further includes: The second network device receives a second ranging packet sent by the first network device. The second ranging packet is a low-power optical signal that carries the registration identifier, and power of the low-power optical signal is less than or equal to a first threshold. In addition, the second network device sends a second response packet to the first network device in response to the second ranging packet. The second response packet indicates a second equalization delay to be used by the first network device in the optical communication network. The second equalization delay may be the same as or different from the first equalization delay.

In an optional example, that the second network device sends the second response packet to the first network device in response to the second ranging packet includes: The second network device parses the second ranging packet to obtain the registration identifier, and the second network device sends the second response packet to the first network device based on the registration identifier. When the second network device receives the low-frequency optical signal corresponding to the ranging packet, the second network device may further receive a service signal generated by another network device. When the second network device receives the ranging packet of the to-be-registered first network device and a normal service packet of the another network device, the second network device normally processes the service packet. In addition, after the second network device performs low-pass filtering on the ranging packet and performs processing such as frequency scanning and cross-correlation, the second network device obtains a bit stream of the ranging packet. In this way, a problem that another service is interrupted because the second network device receives the ranging packet of the first network device can be effectively avoided.

In an optional implementation, after the second network device sends the first response packet to the first network device, the registration method provided in this application further includes: The second network device queries locally stored status information. The status information is used to record operating states of all network devices that have established optical communication connections to the second network device. If the status information indicates that the first network device is in an abnormal state, the second network device sends a second ranging request packet to the first network device. In addition, the second network device receives a third ranging packet that is sent by the first network device in response to the second ranging request packet. The third ranging packet carries the registration identifier. The second network device sends a third response packet to the first network device in response to the third ranging packet. The third response packet indicates a third equalization delay to be used by the first network device in the optical communication network.

In an optional implementation, after the second network device sends the second ranging request packet to the first network device, the registration method provided in this application further includes: sending alarm information if the second network device does not receive the third ranging packet within reference time. The reference time includes at least one of maximum activation time of a ranging window or total slots corresponding to ranging window opening based on a quantity of reference times. The ranging window is a quiet window opened by the second network device based on the third ranging request packet.

In an optional implementation, the third ranging packet is a low-power optical signal, and power of the low-power optical signal is less than or equal to a second threshold. For example, the second threshold may be the same as the first threshold. For another example, the second threshold may be different from the first threshold.

In an optional implementation, a wireless broadband (wireless fidelity, Wi-Fi) channel has been established between the second network device and the first network device, and the third ranging packet is an Ethernet packet transmitted through the Wi-Fi channel. The first network device transmits the ranging packet through the Wi-Fi channel, so that the second network device does not need to open an SN discovery window for the first network device that needs to go online again after going offline, and the second network device already stores the SNs of the network devices and registration identifiers allocated to these network devices. Therefore, registration of the first network device that goes online again via the second network device is implemented without opening a quiet window, and delay jitter of the optical communication network caused by a registration process of the first network device is reduced.

According to a second aspect, this application provides a registration method for an optical communication network. The registration method is performed by a first network device. The registration method includes: The first network device receives an SN of the first network device, a registration identifier of the first network device, and a first ranging request packet that are sent by a second network device. The registration identifier is a registration identifier of the first network device that is obtained by the second network device based on prestored SNs of network devices that are to go online, and the network devices that are to go online include the first network device. The first network device sends a first ranging packet to the second network device in response to the first ranging request packet. The first ranging packet includes the registration identifier. In addition, the first network device receives a first response packet sent by the second network device. The first response packet indicates a first equalization delay to be used by the first network device in the optical communication network.

In this embodiment, the second network device prestores the SNs of the network devices that are to go online, the second network device can allocate a registration identifier to a first network device based on the stored SNs, and the second network device does not need to open SN discovery windows for these first network devices. Correspondingly, after the first network device sends the ranging packet, the second network device can open a ranging window for only the first network device, avoiding delay jitter caused by SN discovery window opening, and avoiding service interruption of another network device. This improves communication performance of the optical communication network.

In some feasible cases, the second network device may not open the ranging window for the first network device, but completes ranging between the first network device and the second network device in another manner without opening a quiet window.

In an optional implementation, if the first network device goes offline from the optical communication network, the registration method provided in this application further includes: The first network device sets a laser of the first network device to a low-power operating mode. The low-power operating mode indicates that power of an optical signal emitted by the laser is less than or equal to a first threshold. In addition, the first network device drives the laser in the low-power operating mode to send a second ranging packet. The second ranging packet carries the registration identifier. The first network device further receives a second response packet that is sent by the second network device based on the second ranging packet. The second response packet indicates a second equalization delay to be used by the first network device in the optical communication network. The second equalization delay may be the same as or different from the first equalization delay.

In an optional implementation, a Wi-Fi channel has been established between the first network device and the second network device. If the first network device goes offline from the optical communication network, the registration method provided in this application further includes: The first network device sends a third ranging packet to the second network device through the Wi-Fi channel. The third ranging packet carries the registration identifier of the first network device. In addition, the first network device receives a third response packet sent by the second network device based on the third ranging packet. The third response packet indicates a third equalization delay to be used by the first network device in the optical communication network. The third equalization delay may be the same as or different from the first equalization delay.

According to a third aspect, this application provides a registration method for an optical communication network. A registered second network device stores SNs of network devices that are to go online on the optical communication network. The registration method includes: The second network device obtains a registration identifier of a first network device based on the prestored SN of the first network device. The first network device is one of the network devices that are to go online. The second network device sends the SN of the first network device and the registration identifier to the first network device, and sends a first ranging request packet to the first network device. Correspondingly, the first network device sends a first ranging packet to the second network device in response to the first ranging request packet. The first ranging packet carries the registration identifier. In addition, the second network device sends a first response packet to the first network device in response to the first ranging packet. The first response packet indicates a first equalization delay to be used by the first network device in the optical communication network.

According to a fourth aspect, this application provides a registration apparatus. The registration apparatus includes a software unit or module configured to perform any one of the optional implementations of the first aspect or the second aspect.

According to a fifth aspect, this application provides a network device. The network device includes a processor, a memory, and a transceiver. The memory is configured to store a serial number of a network device that is to go online on an optical communication network. The processor is configured to perform, based on the serial number of the network device that is to go online, operation steps of the method corresponding to any one of the first aspect or the optional implementations of the first aspect in collaboration with the transceiver.

According to a sixth aspect, this application provides a network device. The network device includes a processor and a transceiver. The processor and the transceiver are configured to cooperatively perform operation steps of the method corresponding to any one of the second aspect or the optional implementations of the second aspect.

According to a seventh aspect, this application provides a communication system. The communication system includes an optical fiber, one network device according to the fifth aspect, and one or more network devices according to the sixth aspect. The optical fiber is configured to connect the network devices. The communication system may be configured to perform operation steps of the method corresponding to any one of the first aspect, the second aspect, the optional implementations of the first aspect, or the optional implementations of the second aspect.

For beneficial effects of any one of the fourth aspect to the seventh aspect, refer to descriptions of any one of the optional implementations of the first aspect to the third aspect. Details are not described herein again. In this application, the implementations provided in the foregoing aspects may be further combined to provide more implementations.

**BRIEF DESCRIPTION OF DRAWINGS**

FIG. 1 is a diagram of a structure of an optical communication network according to this application;

FIG. 2 is a diagram of a structure of a PON 200 according to this application;

FIG. 3 is a diagram of a structure of a main ONU and a sub ONU according to this application;

FIG. 4 is a schematic flowchart 1 of a registration method for an optical communication network according to this application;

FIG. 5 is a schematic flowchart 2 of a registration method for an optical communication network according to this application;

FIG. 6 is a diagram of establishing a Wi-Fi channel according to this application;

FIG. 7 is a diagram of a low-power optical signal according to this application;

FIG. 8 is a schematic flowchart 3 of a registration method for an optical communication network according to this application;

FIG. 9 is a diagram of a structure of a registration apparatus according to this application; and

FIG. 10 is a diagram of a structure of a network device according to this application.

## DESCRIPTION OF EMBODIMENTS

For clear and brief description of the following embodiments, a brief description of a related technology is first provided.

Discovery window: The discovery window is a quiet window opened by an OLT for discovering an SN of an ONU that is to go online in a process in which the ONU is registered with an optical communication network. In a slot corresponding to the discovery window, a service of another ONU that has been registered with the optical communication network is interrupted. The slot corresponding to the discovery window refers to duration in which the discovery window persists after the OLT opens the discovery window. In some examples, the discovery window is also referred to as an SN discovery window. In an FTTR scenario, the discovery window is a quiet window opened by a main ONU for discovering an SN of a sub ONU that is to go online.

Ranging window: The ranging window is a quiet window opened by the OLT for ranging the ONU that is to go online in the process in which the ONU is registered with the optical communication network. In a slot corresponding to the ranging window, a service of another ONU that has been registered with the optical communication network is interrupted. The slot corresponding to the ranging window refers to duration in which the ranging window persists after the OLT opens the ranging window. In an FTTR scenario, the ranging window is a quiet window opened by the main ONU for ranging the sub ONU that is to go online.

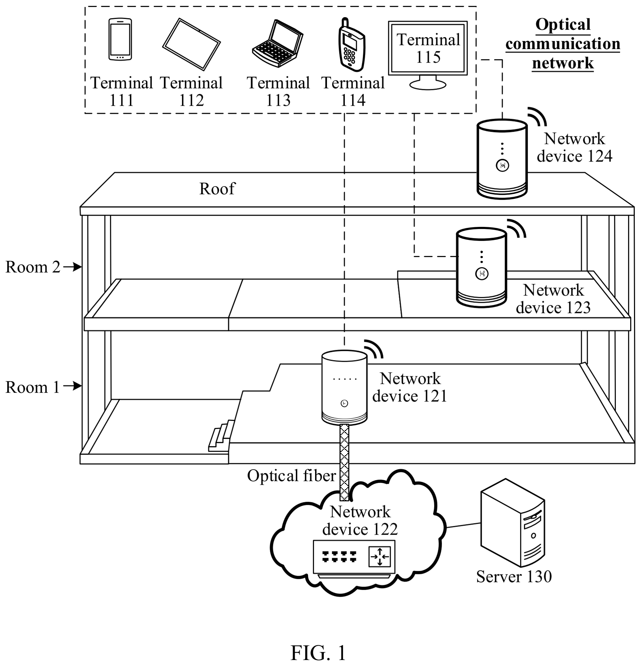

FIG. 1 is a diagram of a structure of an optical communication network according to this application. The optical communication network may also be referred to as an optical transmission network. The optical communication network includes multiple network devices, and one or more of the network devices are configured to connect terminals (for example, terminals 111 to 115 shown in FIG. 1) of a user.

The terminal (terminal) may also be referred to as a terminal device, user equipment (user equipment, UE), a mobile station (mobile station, MS), a mobile terminal (mobile terminal, MT), or the like.

In some embodiments, the terminal may be a mobile phone (for example, the terminal 111 shown in FIG. 1), a tablet computer (for example, the terminal 112 shown in FIG. 1), a computer having a wireless transceiver function (for example, the terminal 113 shown in FIG. 1), a personal communication service (personal communication service, PCS) phone (for example, the terminal 114 shown in FIG. 1), a desktop computer (for example, the terminal 115 shown in FIG. 1), a virtual reality (Virtual Reality, VR) terminal device, an augmented reality (Augmented Reality, AR) terminal device, a wireless terminal in industrial control (industrial control), a wireless terminal in a smart home (smart home), or the like.

In some other embodiments, the terminal may alternatively be a home gateway. The home gateway may be, for example, an optical network terminal (optical network terminal, ONT). For example, a network device 121, a network device 123, and a network device 124 shown in FIG. 1 may be optical network terminals. The optical network terminal may connect user equipment like a PC or a mobile phone to an internet. The home gateway may perform transmission of data of the following services: an internet access service (for example, an interactive personality television service, which includes a video on demand service, a live broadcast service, and a remote education service that are supported by the home gateway), an online game service (for example, a game service performed by a game terminal via the home gateway), an internet protocol (internet protocol, IP) telephone, a video phone, a video surveillance service, and the like. For another example, the home gateway may further implement home control and security service management via a remote network. For example, a user having a home gateway may access, during working or going out, an automated lighting system, a heating system, and a security system that are in an area covered by the home gateway. Neither of a specific technology and a specific device form used for the terminal is limited in embodiments of this application.

The network device may be a routing and forwarding device having an optical communication function. For example, the routing and forwarding device may be a router, a switch, or the like. The network device may alternatively be a broadband network gateway (broadband network gateway, BNG), a broadband remote access server (Broadband Remote Access Server, BRAS), or the like that has an optical communication function.

The terminal can access a server via the network device. In a room 1 shown in FIG. 1, a user may establish, by using a wireless broadband (wireless fidelity, Wi-Fi) technology, a communication connection to the network device 121 via the terminal 111, so that the terminal 111 sends a data packet to a server 130. For example, the network device 123, the network device 124, and each terminal communicate with each other by using Wi-Fi. The network device 123 communicates with the network device 121 through an optical fiber, and the network device 121 also communicates with the network device 122 through an optical fiber.

In an optional implementation, internet protocol (Internet Protocol, IP)-based Wi-Fi channels may be further established between the network device 123, the network device 124, and the network device 121. For example, the Wi-Fi channel is a HIlink® connection.

In some possible cases, the terminal may alternatively establish a communication connection to a radio access network device (radio access network, RAN) (not shown in the figure) by using an optical communication technology, to access the server 130.

The server 130 may be an application server or an authentication and authorization server. The server 130 may provide a video service, a game service, a message service, a music service, an authentication and authorization service, and the like. In an example, functions of multiple services may be integrated into the server 130. For example, the game service and the music service may be deployed on the server 130. In another example, functions of a part of the services may be integrated into the server 130. For example, a part of the game service and a part of the video service are deployed on the server 130. The server 130 may further provide multiple virtual machines by using a virtualization technology, and the virtual machines provide various services. A deployment form of the service is not limited in embodiments of this application.

The network device is connected to the server 130 in a wireless or wired manner. FIG. 1 is merely a diagram. The optical communication network may further include another device that is not shown in FIG. 1. Quantities of terminal devices, network devices, and servers included in the optical communication network are not limited in embodiments of this application.

This application may be applied to scenarios such as a PON, a passive optical local area network (passive optical LAN, POL), an industrial optical network, an in-vehicle optical network, and an internet of things. For example, in the PON scenario, an optical transmitting apparatus (for example, the network device 121) may be located in a user home or a user corridor, and an optical receiving apparatus (for example, the network device 122) may be located in an equipment room of an operator. In the POL scenario, the optical transmitting apparatus and the optical receiving apparatus may be located in a campus (for example, an enterprise or a school). In the industrial optical network scenario, the optical transmitting apparatus and the optical receiving apparatus may be located in an industrial manufacturing workshop. In the in-vehicle optical network scenario, the optical transmitting apparatus and the optical receiving apparatus may be disposed in a vehicle. For example, in the PON scenario, the network device 121 may be an optical network unit (optical network unit, ONU) or an ONT, and the network device 122 may be an OLT. For another example, in the PON scenario, the network device 121 may be a main ONU, and the network device 123 and the network device 124 may be sub ONUs. In the in-vehicle optical network scenario, the optical transmitting apparatus may be a vehicle interface unit (vehicle interface unit, VIU), and the optical receiving apparatus may be a mobile data center (MDC), a vehicle dynamic control (vehicle dynamic control, VDC), or a cockpit data center (cockpit data center, CDC). The technical solutions provided in this application may be further applicable to an optical backbone transmission network, data center optical transmission, short-range optical interconnection, wireless service fronthaul/backhaul, and the like. Specifically, the technical solutions provided in this application may be applied to optical transmitting apparatuses and/or optical receiving apparatuses corresponding to the foregoing different networks. The PON is used as an example. Embodiments of this application may be applied to a time division multiplexing-passive optical network (time division multiplexing-passive optical network, TDM-PON), or may be applied to a wavelength division multiplexing-passive optical network (WDM-PON).

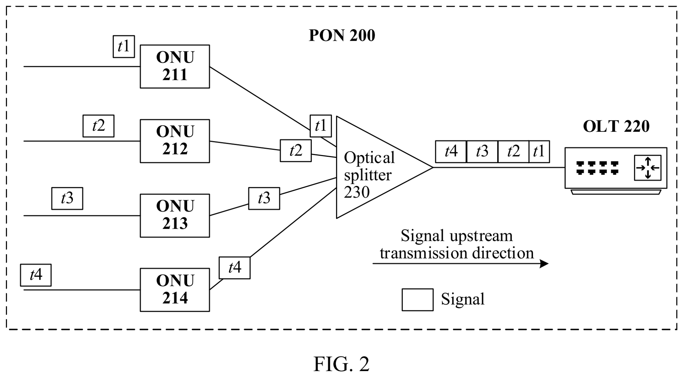

In this embodiment, a whole-house fiber scenario is used as an example to describe a registration method for the optical communication network provided in this application. The whole-house fiber scenario can be implemented by using a fiber to the room (fiber to the room, FTTR) technology. FTTR is a networking technology in which optical fibers, instead of network cables, are laid to each room, optical network devices are deployed to implement interconnection with a home gateway, and whole-house network coverage is ensured in combination with dual-band Wi-Fi. FIG. 2 is a diagram of a structure of a PON 200 according to this application. As shown in FIG. 2, multiple ONUs (for example, an ONU 211 to an ONU 214 in FIG. 2) communicate with an OLT 220 via an optical splitter 230.

For example, signal frames respectively transmitted upstream by the ONU 211 to the ONU 214 to the OLT 220 are a signal t1, a signal t2, a signal t3, and a signal t4. After receiving the signal sent by the ONU, the OLT 220 performs a service or an operation indicated by the signal, for example, performs registration or ranging on the ONU.

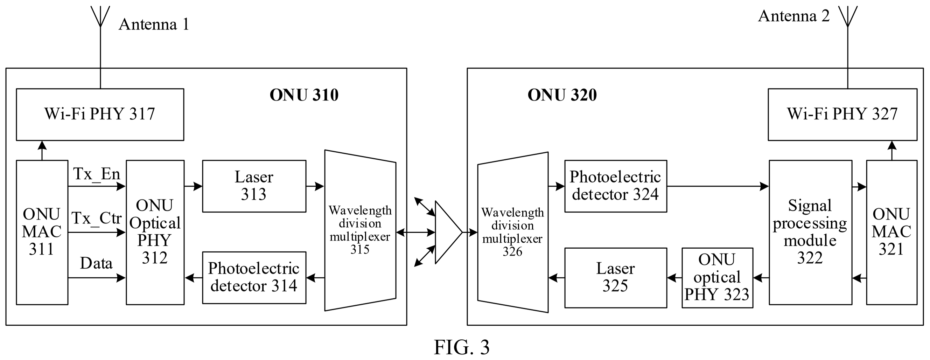

In a possible implementation, the ONU shown in FIG. 2 may be implemented by hardware in a manner provided in FIG. 3. FIG. 3 is a diagram of a structure of a main ONU and a sub ONU according to this application. An ONU 310 may be any one of the ONU 211 to the ONU 214 shown in FIG. 2, and an ONU 320 may register the ONU 310 with an OLT in an optical communication network. In this embodiment, the ONU 310 may also be referred to as a sub ONU in FTTR, and the ONU 320 may also be referred to as a main ONU in FTTR.

As shown in FIG. 3, the ONU 310 includes: an ONU media access control (media access control, MAC) 311, an ONU optical physical layer (physical layer, PHY) 312, a laser 313, and a photoelectric detector 314.

In a sending direction, the ONU MAC 311 may control, through a transmit enabling port (Tx_En, which is also referred to as a switch pin), on and off of the laser 313. For example, if it is currently a light emitting slot (or referred to as an occupied slot) of the ONU 310, the ONU MAC 311 controls, through the transmit enabling port, the laser 313 to be turned on; or if it is currently not a light emitting slot of the ONU 310, the ONU MAC 311 controls, through the transmit enabling port, the laser 313 to be turned off. The ONU MAC 311 may further adjust physical parameters of the laser 313 through a transmit control port (Tx_Ctr), for example, a bias current and a modulation current that are of the laser. The ONU MAC 311 may send service data to the ONU optical PHY 312 through a data port (Data), and the ONU optical PHY 312 transparently transmits the service data. The ONU optical PHY 312 is also referred to as a driver of the laser 313, and is used to drive, according to instructions of the transmit enabling port and/or the transmit control port of the ONU MAC 311, the laser to generate an optical signal. The laser 313 modulates the service data into the optical signal under control of the ONU optical PHY 312, and sends an upstream optical signal that carries the service data to the ONU 320 through an optical fiber.

In a receiving direction, the photoelectric detector 314 receives a downstream optical signal from the ONU 320, and converts the downstream optical signal into an electrical signal. The ONU optical PHY 312 transparently transmits the electrical signal, and the ONU MAC 311 parses the electrical signal to obtain service data. The ONU 310 may further include a wavelength division multiplexer 315, configured to: send an upstream optical signal generated by the laser 313 to an optical fiber, and send a downstream optical signal received from the optical fiber to the photoelectric detector 314.

In this embodiment, the ONU 310 may further include a Wi-Fi PHY 317 and an antenna 1. The Wi-Fi PHY 317 is used to establish a Wi-Fi channel (or referred to as a Wi-Fi link) to the ONU 320 through the antenna 1. For example, the Wi-Fi channel may include but is not limited to, a HIlink® connection, an interconnection channel implemented based on a distributed system, for example, Harmony OS Connect™, and the like. Harmony OS Connect™ is an inter-device interconnection manner obtained by integrating HIlink® and Harmony OS™. It should be noted that different vendors may record Wi-Fi channels as different names based on information such as different hardware components in devices and different names of the devices, to implement coordination between Wi-Fi communication and optical communication between the devices. This improves efficiency and robustness of the optical communication.

Wireless communication functions of the ONU 310 and the ONU 320 may be implemented by using the antenna 1, an antenna 2, a mobile communication module, a modem processor, a baseband processor (not shown in the figure), and the like. For example, the antenna 1 and the antenna 2 are configured to transmit and receive electromagnetic wave signals. Each antenna may be configured to cover one or more communication frequency bands. Different antennas may be further reused, to improve antenna utilization. For example, the antenna 1 may be reused as a diversity antenna of a wireless local area network. In some embodiments, the antenna may be used in combination with a tuning switch. For the mobile communication module, in an example of the ONU 310, at least a part of functional modules of the mobile communication module may be disposed in the Wi-Fi PHY 317, or at least a part of the functional modules of the mobile communication module and at least a part of modules of the Wi-Fi PHY 317 may be disposed in a same component.

The ONU 320 may include an ONU MAC 321, a signal processing module 322, an ONU optical PHY 323, a photoelectric detector 324, and a laser 325. In a receiving direction, the photoelectric detector 324 receives an upstream optical signal from the ONU 310, and converts the upstream optical signal into an electrical signal. The electrical signal may be an analog electrical signal or a digital electrical signal. The signal processing module 322 may be implemented by using an analog component (for example, an amplifier) or a digital component (for example, a digital signal processor). Therefore, the signal processing module 322 may perform analog-related processing or process the digital electrical signal. The ONU MAC 321 parses the electrical signal that passes through the signal processing module 322, to obtain service data. In a sending direction, the ONU MAC 321 generates service data, and the signal processing module 322 performs analog- or digital-related processing on the service data. The laser 325 modulates the service data into an optical signal under control of the ONU optical PHY 323, and sends the downstream optical signal that carries the service data to the ONU 310 through an optical fiber. The ONU 320 may further include a wavelength division multiplexer 326, configured to: send the downstream optical signal generated by the laser 325 to the optical fiber, and send an upstream optical signal received from the optical fiber to the photoelectric detector 324.

For implementations of the Wi-Fi PHY 327 and the antenna 2 in the ONU 320, refer to the descriptions of the ONU 310. Details are not described herein again.

In this embodiment, in addition to an optical transmission channel, a Wi-Fi channel may be further included between the main ONU and the sub ONU. The Wi-Fi channel may be used to provide a communication capability for the main ONU and the sub ONU when communication provided by the optical transmission channel is disconnected, so that the main ONU notifies the sub ONU to recover the optical transmission channel, or the sub ONU actively sends online information to the main ONU, where the online information is used to recover the optical transmission channel between the main ONU and the sub ONU.

In a common technology, in an example of an FTTR scenario, a main ONU delivers a grant instruction, and periodically opens an SN discovery window for a sub ONU. In a slot corresponding to the SN discovery window, the sub ONU sends an SN signal to the main ONU. Then, the main ONU allocates, based on the received SN signal, a registration identifier to the sub ONU that is to go online, and opens a quiet window for ranging. Then, in a slot corresponding to the quiet window for ranging, the main ONU performs ranging and registration on the sub ONU that is to go online, to complete a registration process of the sub ONU. In the slot corresponding to the SN discovery window and the slot corresponding to the ranging grant window, a service of another sub ONU connected to the main ONU needs to be interrupted. Consequently, in the ONU registration solution, the SN discovery window is periodically opened, which causes large delay jitter. This brings a challenge to a PON system in an application scenario with a high requirement on delay jitter.

To reduce upstream delay jitter caused by a registration process, based on the main ONU (ONU 320) and the sub ONU (ONU 310) provided in FIG. 3, the registration method for an optical communication network provided in this application is described below separately by using two scenarios in which an ONU goes online on the optical communication network for the first time and goes online again after going offline.

In a first scenario, the ONU goes online on the optical communication network for the first time.

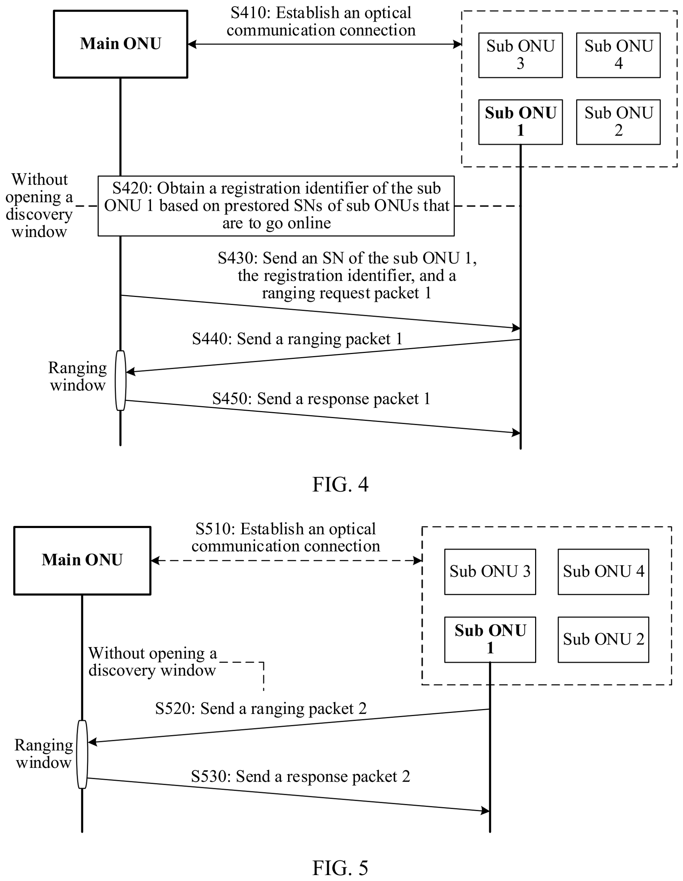

FIG. 4 is a schematic flowchart 1 of a registration method for an optical communication network according to this application. A main ONU may be referred to as a second network device or the like. A sub ONU 1 as an example may be referred to as a first network device or the like.

In this embodiment, the main ONU is also referred to as a main ONT, and the sub ONU is also referred to as a sub ONT. In an FTTR scenario, an OLT is at a location provided by an operator network (for example, a corridor of a building, an equipment room, or a dedicated communication box on a roadside), and the main ONU and the sub ONU are located in a user room. The main ONU prestores SNs of sub ONUs that are to go online. For example, operation personnel write, via a software tool, the SNs of the sub ONUs that are to go online into a memory of the main ONU. The memory may be configured to cache information such as to-be-forwarded data in the main ONU and pre-written valid SNs. In some optional cases, the memory may be further configured to store an association relationship between an SN and an allocated registration identifier of a sub ONU.

The memory provided in embodiments may include but is not limited to: a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), a magnetic disk storage medium or another magnetic storage device, or any other medium capable of carrying or storing expected program code in a form of an instruction or a data structure and capable of being accessed by a computer. The memory is not limited thereto. The memory may be integrated with a processor, or may exist independently, and is coupled to the processor through an interface circuit of the main ONU. This is not specifically limited in embodiments of this application.

In some other optional implementations, the SN that is of the ONU to go online and that is stored in the main ONU may be delivered by another device. For example, the another device is an OLT, another network device, or the like that communicates with the main ONU. This is not limited in this application.

Refer to FIG. 4. The registration method for the optical communication network provided in this embodiment includes the following steps S410 to S450.

S410: The main ONU establishes an optical communication connection to each sub ONU.

For an implementation process of S410, the following provides a possible specific example. In this example, a data frame is a signal frame transmitted in a form of an optical signal.

Step 1: The main ONU continuously broadcasts data frames to multiple sub ONUs. Each data frame carries control information. The control information indicates a process such as going online, ranging, or registration of the sub ONU on the optical communication network.

In this embodiment, an example is provided with reference to FIG. 3. The data frame may be an optical signal generated by the laser 325 as driven by the optical PHY 323 of the main ONU after the main ONU MAC 321 generates to-be-sent data.

Optionally, the data frame may further indicate the sub ONU to forward one or more optical signals, and the like.

The following describes a process of establishing an optical communication connection between the main ONU and the sub ONU by using the sub ONU 1 of the sub ONUs as an example.

Step 2: The sub ONU 1 performs frame synchronization on the received data frame, and establishes an optical communication connection to the main ONU.

The frame synchronization means that the sub ONU 1 performs frame synchronization on a received serial signal. The frame synchronization means that the sub ONU 1 determines a start position and an end position of one data frame in the serial signal by identifying a start and an end of the frame. A frame synchronization method may include but is not limited to at least one of character count, character stuffing with start and end delimiters, bit stuffing with start and end flags, and physical layer coding violation.

A frame synchronization process is described by using bit stuffing with start and end flags as an example. A frame header of each data frame carries a string of specific bits (for example, 0101). If the sub ONU 1 identifies the specific bits, the sub ONU 1 determines that a frame header of a data frame is identified, and considers data before a next frame header in serial data as data of the data frame, to implement frame synchronization of the data frame. In some possible cases, the frame synchronization is also referred to as "frame delimitation".

In some optional embodiments, because frame lengths of the data frames are the same, after finding a frame header of a data frame 1 (for example, specific bits at a start position of the frame header are 0101), the sub ONU 1 may identify a frame header of a next data frame (for example, a data frame 2) after a delay for a frame length of one data frame.

For example, if a start position of the frame header of the next data frame is the specific bits (for example, 0101), the sub ONU 1 determines that the frame synchronization of the data frame 1 is correct.

For another example, if a start position of the frame header of the next data frame is not the specific bits (for example, 0101), the sub ONU 1 determines that the frame synchronization of the data frame 1 is incorrect. For example, bits at the start position of the frame header are 1111, but the specific bits are 0101. When the sub ONU 1 determines that the frame synchronization of the data frame 1 is incorrect (which is also referred to as out-of-frame), the sub ONU 1 performs the foregoing frame synchronization process again, to select a data frame with correct frame synchronization to perform ranging and registration processes of the sub ONU.

The foregoing example is merely a possible implementation of bit stuffing with start and end flags provided in this embodiment, and should not be construed as a limitation on this application. The sub ONU 1 may alternatively implement the frame synchronization of the data frame by using another frame synchronization method. For specific implementations of character count, character stuffing with start and end delimiters, and physical layer coding violation, refer to the descriptions of the common technology. Details are not described herein again.

Step 3: The sub ONU 1 parses the data frame to obtain control information, and starts a process corresponding to the control information.

In this embodiment, if the control information indicates the sub ONU 1 to go online on the optical communication network via the main ONU, the process corresponding to the control information means ranging and registration processes to be started by the sub ONU 1.

After establishing the optical communication connection to the sub ONU 1, the main ONU continues to perform the following step S420.

S420: The main ONU obtains a registration identifier of the sub ONU 1 based on the prestored SNs of the sub ONUs that are to go online.

For example, the registration identifier is an identification (identification, ID) of the sub ONU 1, and the ID of the sub ONU 1 is denoted as an ONU ID 1.

In some optional examples, the registration identifier may alternatively be another type of home optical network device ID, for example, a single family unit (single family unit, SFU) ID (SFU ID for short), a home gateway unit (home gateway unit, HGU) ID (HGU ID for short), a single business unit (single business unit, SBU) ID (SBU ID for short), or the like. In this specification, embodiments are described by using an ONU ID as an example. However, it should not be understood that the registration identifier provided in this application is the ONU ID only.

The registration identifier is registration information that needs to be used by the sub ONU in a process of going online. In a process in which the sub ONU 1 communicates with the main ONU, the main ONU uniquely identifies the sub ONU 1 based on the ONU ID 1, so that data sent to the sub ONU 1 is not forwarded to another sub ONU. This improves accuracy of communication between the sub ONU and the main ONU.

In some optional implementations, the foregoing S410 and S420 may also be referred to as a discovery phase for the sub ONU to go online on the optical communication network via the main ONU. In a related technology, a main ONU periodically opens an SN discovery window for each sub ONU in a discovery phase of the sub ONUs. In this embodiment, the main ONU prestores the SNs of the sub ONUs that are to go online, so that after the frame synchronization is performed between the main ONU and the sub ONU, the main ONU can allocate ONU IDs to the sub ONUs based on the stored SNs, avoiding delay jitter caused by SN discovery window opening.

For example, because the main ONU stores the SNs of the sub ONUs that are to go online, the main ONU does not need to open the discovery window. To be specific, the main ONU can allocate a registration identifier to a sub ONU that is to go online without interrupting a service of another sub ONU. In this way, registration of the sub ONU in the optical communication network is implemented without opening a quiet window. This helps improve overall efficiency of transmission between the sub ONU and the main ONU in the optical communication network. That the discovery window is not opened described in this embodiment means that the main ONU does not need to open the discovery window for the registration process of the sub ONU, or the main ONU does not need to set a specific slot for the registration process of the sub ONU, and interrupts a service of another sub ONU in the slot. In some possible cases, in a process in which the main ONU registers the sub ONU, that the main ONU does not open the discovery window is also referred to as that registration of the sub ONU in the optical communication network is implemented without opening a quiet window.

Still refer to FIG. 4. A ranging phase for the sub ONU 1 to go online on the optical communication network via the main ONU is described below by using an example.

S430: The main ONU sends an SN of the sub ONU 1, the registration identifier of the sub ONU 1, and a ranging request packet 1 to the sub ONU 1.

In some optional cases, the SN of the sub ONU 1 and the registration identifier of the sub ONU 1 may be encapsulated in one message or one packet.

The ranging request packet 1 indicates the sub ONU 1 to start a process of ranging between the sub ONU 1 and the main ONU based on the ONU ID 1. In some possible examples, the ranging request packet 1 may also be referred to as a first ranging request packet.

Optionally, after delivering the ranging request packet 1, the main ONU may further open a ranging window for the sub ONU 1. In a slot corresponding to the ranging window, the sub ONU 1 completes the ranging process in collaboration with the main ONU.

In a feasible example, a process in which the main ONU sends a ranging request packet to the sub ONU 1 may be repeatedly executed for multiple times, so that the sub ONU 1 can receive the ranging request packet, to make the process in which the main ONU allocates the ONU ID 1 to the sub ONU 1 successful. For example, a quantity of execution repetitions may be 2, 3, 5, or another value. The quantity of execution repetitions may be set by operation personnel, or the quantity of execution repetitions may be changed based on different user requirements. This is not limited in this application. It should be noted that the main ONU may repeatedly send, to the sub ONU 1, a packet that carries the ID of the ONU 1. Details are not described herein.

It should be noted that, in this embodiment, another sub ONU may also receive the information in S430, but the another sub ONU may determine whether the received SN is consistent with a local SN of the another sub ONU. If the received SN is inconsistent with the local SN of the another sub ONU, a ranging procedure is not started. The sub ONU starts the ranging procedure (for example, sending a ranging packet) only when the SN received by the sub ONU is consistent with the local SN of the sub ONU. Therefore, in this embodiment, the sub ONU may identify and perform determining for the received information, avoiding an error of the main ONU due to parallel ranging of multiple sub ONUs, and improving accuracy of registration between the main ONU and the sub ONU.

Corresponding to S430, the sub ONU 1 receives the SN of the sub ONU 1, the registration identifier of the sub ONU 1, and the ranging request packet 1 that are sent by the main ONU.

S440: The sub ONU 1 sends a ranging packet 1 to the main ONU in response to the ranging request packet 1.

The ranging packet 1 includes the ONU ID 1. In some possible examples, the ranging packet 1 may also be referred to as a first ranging packet.

Corresponding to S440, the main ONU receives the ranging packet 1.

S450: The main ONU sends a response packet 1 to the sub ONU 1 in response to the ranging packet 1.

In some examples, the response packet 1 may also be referred to as a first response packet.

The response packet 1 indicates a first equalization delay (equalization delay, eqD) to be used by the sub ONU 1 in the optical communication network. The first equalization delay (for example, eqD 1) indicates a channel to be used by the sub ONU 1 in a process of service communication between the main ONU and the sub ONU 1.

In this example, after the main ONU allocates the eqD to the sub ONU 1 and performs service grant, it may be considered that the sub ONU 1 is registered with the optical communication network to which the main ONU belongs.

Generally, in the FTTR scenario, a quantity and a device type of sub ONUs that are to go online in the room are determined. Before all the sub ONUs go online, the operation personnel write the SNs of the sub ONUs that are to go online into the main ONU in the room, so that the main ONU does not need to open an SN discovery window for these sub ONUs in a process in which the sub ONUs in the room go online, reducing delay jitter in the optical communication network, and avoiding service interruption of another sub ONU in the SN discovery window. This improves communication performance of the optical communication network.

The foregoing embodiment is an example in which the sub ONU goes online on the optical communication network for the first time. A second scenario provided in embodiments is described below by using an example.

In the second scenario, a sub ONU goes online again after going offline from an optical communication network.

In a normal use process of the optical communication network, due to factors like a hardware fault in a network device (the sub ONU or a main ONU), communication disconnection inevitably occurs between the sub ONU and the main ONU. To recover optical communication between network devices in a timely manner, embodiments further provide a method for registering a network device with an optical communication network. FIG. 5 is a schematic flowchart 2 of a registration method for an optical communication network according to this application. For a relationship between a main ONU and a sub ONU, refer to the descriptions of FIG. 4. Details are not described herein again.

Refer to FIG. 5. The registration method for the optical communication network provided in this embodiment includes the following steps S510 to S530.

S510: The main ONU establishes an optical communication connection to a sub ONU 1.

For a process in which the main ONU establishes the optical communication connection, refer to the descriptions of S410. Details are not described herein again.

It should be noted that, if the sub ONU 1 goes offline from the optical communication network, but remains the optical communication connection to the main ONU, the operation step included in S510 may not be performed.

S520: The sub ONU 1 sends a ranging packet 2 to the main ONU.

Corresponding to S520, the main ONU receives the ranging packet 2.

In some possible examples, the ranging packet 2 may also be referred to as a second ranging packet.

The ranging packet 2 carries a registration identifier of the sub ONU 1.

Correspondingly, after the main ONU receives the ranging packet 2 sent by the sub ONU 1, the main ONU opens a ranging window for the sub ONU 1. In a slot corresponding to the ranging window, the sub ONU 1 completes a ranging process in collaboration with the main ONU.

To reduce delay jitter in the optical communication network and register the sub ONU with the optical communication network without opening a quiet window, the ranging packet in S520 may be but is not limited to an Ethernet packet transmitted through a Wi-Fi channel and a low-frequency optical signal transmitted through the optical communication connection. The following separately describes the two implementations by using examples.

In a possible implementation, the sub ONU 1 sends the ranging packet through the Wi-Fi channel between the sub ONU 1 and the main ONU. For an implementation of the Wi-Fi channel, refer to the descriptions of FIG. 3. Details are not described herein again.

In this example, the sub ONU 1 transmits the ranging packet through the Wi-Fi channel, so that the main ONU does not need to open an SN discovery window for a sub ONU that needs to go online again after going offline, and the main ONU has already stored SNs of sub ONUs and ONU IDs allocated to these sub ONUs. Therefore, registration of the sub ONU that goes online again via the main ONU is implemented without opening a quiet window, and delay jitter of the optical communication network caused by a registration process of the sub ONU is reduced.

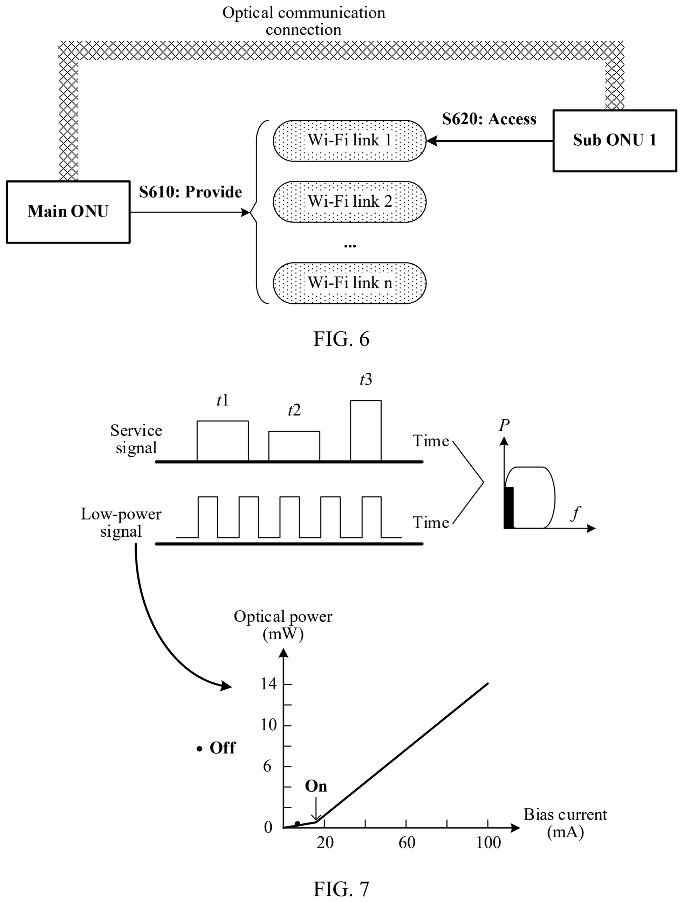

For a manner of establishing the Wi-Fi channel, the following provides a possible example. FIG. 6 is a diagram of establishing the Wi-Fi channel according to this application. A process of establishing the Wi-Fi channel includes the following steps S610 and S620.

S610: The main ONU provides one or more Wi-Fi links.

As shown in FIG. 6, there are a Wi-Fi link 1 to a Wi-Fi link n, where n is a positive integer greater than 1.

It should be understood that the Wi-Fi links provided by the main ONU may be accessed by multiple devices of different types. The multiple devices of different types include but are not limited to: a sub ONU, a terminal (for example, a mobile phone, a notebook computer, a tablet computer, or a PC), a smart screen, a smart display, an AR device, a VR device, or the like.

S620: The sub ONU 1 accesses, based on one or more Wi-Fi signals obtained through scanning, the Wi-Fi link provided by the main ONU, to establish the Wi-Fi channel between the main ONU and the sub ONU 1.

For example, the Wi-Fi link accessed by the sub ONU 1 is the Wi-Fi link 1 in FIG. 6.

Optionally, before the sub ONU 1 accesses the Wi-Fi link provided by the main ONU, the main ONU may set an access password (for example, a string of specific characters: 12345678 or other characters) for a process of accessing the Wi-Fi link. The main ONU allocates one Wi-Fi link to the sub ONU 1 only when the sub ONU 1 provides a correct access password. In some possible cases, a process in which the sub ONU 1 logs in to the main ONU by using a Wi-Fi signal is also referred to as a "handshake".

The Wi-Fi channel provided in this embodiment may include but is not limited to: a HIlink® connection, an interconnection channel implemented based on a distributed system, for example, Harmony OS Connect™,

An example is used for description with reference to content provided in FIG. 3. The Wi-Fi channel may be implemented based on the Wi-Fi PHY 317, the antenna 1, the Wi-Fi PHY 327, and the antenna 2. For a specific implementation, refer to the descriptions of FIG. 3. Details are not described herein again.

In this embodiment, the optical communication connection and the Wi-Fi channel are established between the main ONU and the sub ONU. When the sub ONU goes offline due to a fault of the optical communication connection, the sub ONU may interact with the main ONU through the Wi-Fi channel, to notify the main ONU to open the ranging window for the sub ONU, so as to implement a process in which the sub ONU goes online again via the main ONU. This helps improve performance of data communication performed by the sub ONU via the optical communication network, quickly recover the optical communication connection between the sub ONU and the main ONU, and improves fault recovery efficiency of the optical communication network.

In another possible implementation, the sub ONU 1 sets the sub ONU 1 to a low-power operating mode with a low-power optical signal, and sends the ranging packet to the main ONU based on the low-power operating mode with the low-power optical signal. The low-power operating mode with the low-power optical signal means that a laser of the sub ONU 1 operates in a low-power state, and the low power may mean that power of an optical signal emitted by the laser is less than or equal to a first threshold. A value of the first threshold of the low-power optical signal may be set based on different hardware components included in the laser. In some optional cases, power of an optical signal emitted by the laser in the low-power operating mode is less than power of an optical signal emitted by the laser when the laser performs a normal service.

The following uses a single-tone (tone) low-power optical signal as an example to describe the ranging packet sent by the sub ONU. FIG. 7 is a diagram of a low-power optical signal according to this application. With reference to FIG. 3 and FIG. 7, a process in which the sub ONU sends the ranging packet by using the low-power optical signal is described by using an example.

Step 1: The ONU MAC 311 in the ONU 310 sends an adjustment instruction to the ONU optical PHY 312: decreasing a bias current (Ibias), so that an adjusted Ibias is less than or equal to a threshold current ($I_T$); and turning off a modulation current (Imod) and turning off Tx_En.

For example, the threshold current is 5 milli amperes (milli ampere, mA).

Step 2: After the laser 313 is stabilized, the ONU MAC 311 sends information about a specific frequency through Tx_En. In addition, the laser 313 keeps turning on and off an optical port to generate an optical signal corresponding to the information about the specific frequency, and sends the generated optical signal to the ONU 320.

The information about the specific frequency is information carried in the ranging packet, and the ranging packet carries a registration identifier corresponding to the ONU 310.

Because the Ibias current has been decreased in step 1, power of all optical signals generated by the laser 313 is low, and the optical signal that corresponds to the information about the specific frequency and that is generated by the laser may also be referred to as a low-power optical signal. For example, the ONU 310 loads, through the transmit enabling port (Tx_En), the information carried in the ranging packet to a spontaneous emission optical signal generated by the laser, and power of the spontaneous emission optical signal is lower than power of a service signal, avoiding impact of the ranging packet on the service signal when the discovery window is not opened.

Description is provided with reference to the low-power optical signal in FIG. 7. Maximum power of the low-power optical signal is -23.4 decibel-milliwatts (dBm), and minimum power is -45.8 dBm.

In this embodiment, an indicator describing the power of the optical signal may be obtained according to Formula 1:

$$dBm=10*\log(P/1mW) \text{ Formula 1}$$

P represents a power value in a unit of watt.

Step 3: The ONU 320 parses the received optical signal, and obtains the ranging packet from the ONU 310.

For example, the photoelectric detector 324 in the ONU 320 performs optical-to-electrical conversion on the received optical signal, to obtain an electrical signal. Then, the signal processing module 322 processes the electrical signal obtained through the optical-to-electrical conversion, to obtain a bit stream corresponding to the ranging packet.

It should be noted that, because the ONU 320 does not open the SN discovery window, when the ONU 320 receives the optical signal corresponding to the ranging packet, the ONU 320 may further receive a service signal generated by another sub ONU, for example, t1, t2, and t3 in FIG. 7. When the ONU 320 receives a ranging packet of a to-be-registered ONU 1 and a normal service packet of the another sub ONU, the main ONU normally processes the service packet, and after the main ONU performs low-pass filtering on the ranging packet and performs processing such as frequency scanning and cross-correlation, the main ONU obtains the bit stream of the ranging packet.

In some optional implementations, S510, S520, and possible substeps thereof may also be referred to as a discovery phase for the sub ONU to go online on the optical communication network via the main ONU. In a common technology, the main ONU periodically opens the SN discovery window for each sub ONU. In this embodiment, the main ONU prestores the SNs of the sub ONUs that are to go online, so that after the optical communication connection is established between the main ONU and the sub ONU, the main ONU can allocate an equalization delay (eqD) to the sub ONU based on the received ranging packet, and the main ONU does not need to interrupt the normal service of the another sub ONU, avoiding delay jitter caused by the SN discovery window, so that the sub ONU is registered with the optical communication network without opening a quiet window. This helps improve efficiency of overall transmission between the sub ONU and the main ONU in the optical communication network.

Still refer to FIG. 5. The registration method for the optical communication network provided in this embodiment further includes step S530.

S530: The main ONU sends a response packet 2 to the sub ONU 1 in response to the ranging packet 2.

The response packet 2 indicates a second equalization delay to be used by the sub ONU 1 in the optical communication network.

In a first possible example, if the ranging packet 2 is an Ethernet packet transmitted through the Wi-Fi channel, a value of the equalization delay indicated by the response packet 2 may be eqD 2.

In a second possible example, if the ranging packet 2 is a low-frequency optical signal transmitted through the optical communication connection, a value of the equalization delay indicated by the response packet 2 may be eqD 3.

It should be noted that the foregoing eqD 1, eqD 2, and eqD 3 may be the same or different. This is not limited in this application.

Regardless of whether the ranging packet is transmitted through the Wi-Fi channel provided in FIG. 6 or the ranging packet is represented by using a signal feature (for example, the specific frequency) provided in FIG. 7, in the discovery phase for the sub ONU to go online again, the main ONU does not need to open a quiet window (the SN discovery window) for the sub ONU, avoiding delay jitter caused by the SN discovery window, and avoiding a case in which the main ONU needs to interrupt the service of the another sub ONU to perform ranging and registration processes on the sub ONU that is to go online. This helps improve efficiency of overall transmission between the sub ONU and the main ONU in the optical communication network.

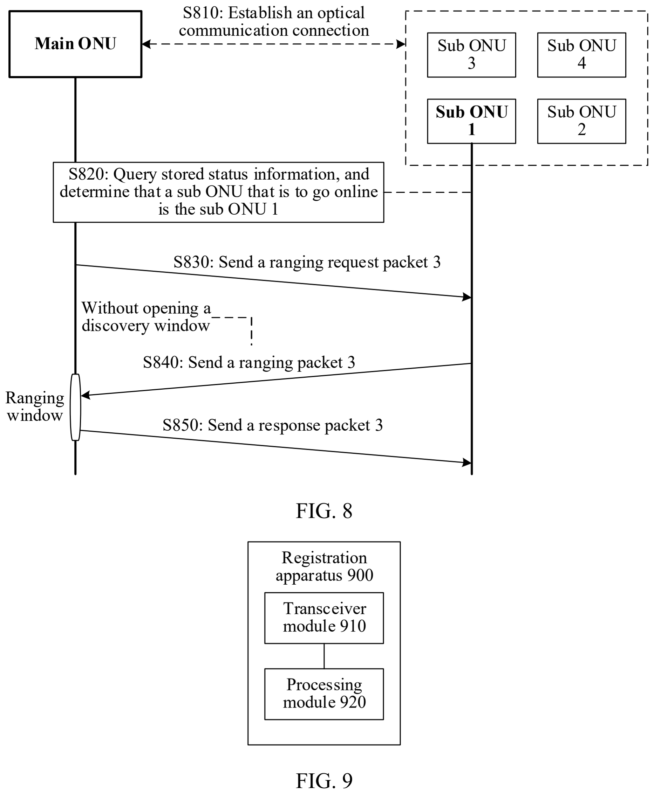

The registration method provided in FIG. 5 to FIG. 7 is merely an example provided in this embodiment, and should not be construed as a limitation on this application. After the sub ONU goes offline, the main ONU and the sub ONU may recover the optical communication connection between the sub ONU and the main ONU (go online again) in another manner. FIG. 8 is a schematic flowchart 3 of a registration method for an optical communication network according to this application. For a relationship between a main ONU and a sub ONU, refer to the descriptions of FIG. 4. Details are not described herein again.

Refer to FIG. 8. The registration method for the optical communication network provided in this embodiment includes the following steps S810 to S850.

S810: The main ONU establishes an optical communication connection to a sub ONU 1.

For a process in which the main ONU establishes the optical communication connection, refer to the descriptions of S410. Details are not described herein again.

It should be noted that, if the sub ONU 1 goes offline from the optical communication network, but remains the optical communication connection to the main ONU, an operation step included in S810 may not be performed.

With reference to the registration method in FIG. 4, if the sub ONU 1 registered with the optical communication network goes offline, to quickly recover communication performance of the sub ONU 1, the main ONU performs the following S820.

S820: The main ONU queries stored status information, and determines that a sub ONU that is to go online is the sub ONU 1.

The status information may be stored in a memory of the main ONU. The status information records operating states of all sub ONUs that have established optical communication connections to the main ONU. For example, the operating state is a state like normal online, offline, or online again. The normal online means that the optical communication connection between the sub ONU and the main ONU is normal and data communication can be implemented. The offline means that the sub ONU cannot access the optical communication network via the main ONU. The online again means that the sub ONU cannot access the optical communication network via the main ONU but is attempting to recover optical communication with the main ONU.

In some optional cases, the normal online may also be referred to as a normal state, and the offline and the online again may be collectively referred to as an abnormal state.

In the main ONU, the status information may be recorded in a data table format, as shown in Table 1 below.

Table 1

| ONU ID | SN | Control flag (control flag) | Run state (run state) | Configure state (config state) | Match state (match state) |
|--------|------------------|-----------------------------|-----------------------|--------------------------------|---------------------------|
| 1 | 1122334455667788 | Active | Offline | Initial | Unmatched |
| 2 | 6877687768060400 | Active | Online | Normal | Matched |
| 3 | 6877687768776803 | Active | Online | Normal | Matched |
| 4 | 6877687700000370 | Active | Offline | Initial | Unmatched |

The control flag indicates whether a sub ONU is valid (in this embodiment, the control flag may indicate whether an SN of the sub ONU is prestored in the main ONU), and the run state is the foregoing status information.

The configure state indicates a registration configuration of the sub ONU, and the match state indicates whether the sub ONU accesses the optical communication network. For example, if the configure state of the sub ONU 1 with ONUID=3 is normal (normal), it indicates that the sub ONU 3 is in a normal registration configuration and can normally use the optical communication network. For another example, if the configure state of the sub ONU 1 with ONU ID=1 is initial (initial), it indicates that the sub ONU 1 is in an unregistered configuration and cannot use the optical communication network. Table 1 is an example provided in this application, and should not be construed as a limitation on this application.

After determining that the sub ONU that is to go online is the sub ONU 1 (the sub ONU 1 is in the offline state), the main ONU performs S830.

S830: The main ONU sends a ranging request packet 3 to the sub ONU 1.

Correspondingly, the sub ONU 1 receives the ranging request packet 3 sent by the main ONU. In some possible examples, the ranging request packet 3 may also be referred to as a third ranging request packet. In addition, the main ONU further opens a ranging window based on the ranging request packet 3.

S840: The sub ONU 1 sends a ranging packet 3 to the main ONU in response to the ranging request packet 3.

In some possible examples, the ranging packet 3 may also be referred to as a third ranging packet. The ranging packet 3 carries an ONU ID (for example, the ONU ID 1) of the sub ONU 1.

S850: The main ONU sends a response packet 3 to the sub ONU 1 in response to the ranging packet of the sub ONU 1.

The response packet 3 indicates a third equalization delay to be used by the sub ONU 1 in the optical communication network. The third equalization delay may be the same as or different from the foregoing eqD 1, eqD 2, and eqD 3.

In an optional implementation, a maximum quantity (N) of times that the ranging window is opened is set for the main ONU. If a sub ONU still does not go online in slots corresponding to the N times that the ranging window is opened, the main ONU outputs alarm information.

In another optional implementation, maximum activation time (T) of a single ranging window is set for the main ONU. If a sub ONU still does not go online within the maximum activation time, the main ONU outputs alarm information.

For example, a manner in which the main ONU outputs the alarm information may include: The main ONU sends the alarm information to a network management system.

It should be noted that, each device in a home network is in a stable state. Unless a person performs deliberate destruction, there is no process in which an unfamiliar sub ONU goes online again. In this embodiment, the main ONU queries, in real time based on management of an SN list (for example, Table 1), status information of a sub ONU (or referred to as a modem, an optical modem, or the like) that is recorded by the main ONU. When the sub ONU is in the normal state (in the online state), the main ONU stops opening an SN discovery window, to reduce delay jitter between the main ONU and each sub ONU. When a sub ONU goes offline, the main ONU attempts to initiate a re-online procedure. If a simple fault occurs, for example, the sub ONU is restarted because software abort of the sub ONU without error prompt or the sub ONU is restarted due to a power outage of the sub ONU, the sub ONU can quickly and automatically go online after being restarted, so that all the sub ONUs in the home network are always in the online state. In addition, if none of the sub ONUs in the home network can go online again after timeout (greater than or equal to the maximum activation time or the slot corresponding to the ranging window), the main ONU generates an alarm, and the network management system arranges operation personnel to perform door-to-door maintenance, to improve performance of the optical communication network in an FTTR scenario.

The foregoing embodiments are described by using the FTTR scenario as an example. However, the registration method for the optical communication network provided in this application may be further applied to another optical communication scenario. As long as there is one main ONU (or main ONT) and multiple sub ONUs (or sub ONTs) in the optical communication scenario, the registration method provided in this application may be used. This is not limited in this application.

It may be understood that, to implement functions in the foregoing embodiments, a computing device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The foregoing describes in detail the registration method provided in embodiments with reference to FIG. 1 to FIG. 8. The following describes a registration apparatus provided in embodiments with reference to FIG. 9.

FIG. 9 is a diagram of a structure of a registration apparatus according to this application. The registration apparatus 900 may be configured to implement a function of any one of the ONUs in the foregoing method embodiments, and therefore can also implement beneficial effects of the foregoing method embodiments. In this embodiment, the registration apparatus 900 may be the network device 121, the network device 123, or the network device 124 shown in FIG. 1, or any one of ONUs shown in subsequent accompanying drawings, or may be a module (for example, a chip) used in the ONU.

As shown in FIG. 9, the registration apparatus 900 includes a transceiver module 910 and a processing module 920. The transceiver module 910 may collaborate with the processing module 920 to implement steps in the foregoing method embodiments. For more detailed descriptions of the transceiver module 910 and the processing module 920, directly refer to the related descriptions of the ONUs in the method embodiments shown in the foregoing accompanying drawings. Details are not described herein again.

When the registration apparatus implements, by using software, the registration method shown in any one of the foregoing accompanying drawings, the registration apparatus and units of the registration apparatus may alternatively be software modules. A processor invokes the software modules to implement the foregoing registration method. The processor may be a central processing unit (central processing unit, CPU), an application-specific integrated circuit (application-specific integrated circuit, ASIC) implementation, or a programmable logic device (programmable logic device, PLD). The PLD may be a complex programmable logical device (complex programmable logical device, CPLD), a field programmable gate array (field programmable gate array, FPGA), generic array logic (generic array logic, GAL), or any combination thereof.

For more detailed descriptions of the registration apparatus, refer to the related descriptions in the embodiments shown in the accompanying drawings. Details are not described herein again. It may be understood that the registration apparatus shown in the foregoing accompanying drawings is merely an example provided in this embodiment, and the registration apparatus may include more or fewer units based on different ranging processes or services. This is not limited in this application.

When the registration apparatus is implemented by using hardware, the hardware may be implemented by using a processor or a chip system. The chip system includes one or more chips, and each chip includes an interface circuit and a control circuit. The interface circuit is configured to: receive data from another device other than the chip and transmit the data to the control circuit, or send data from the control circuit to another device other than the chip.

The control circuit and the interface circuit are configured to implement, by using a logic circuit or by executing code instructions, the method according to any one of the possible implementations of the foregoing embodiments. For beneficial effects, refer to the descriptions of any aspect of foregoing embodiments. Details are not described herein again.

It may be understood that the processor in this embodiment of this application may be a CPU, or may be another general-purpose processor, a digital signal processor (digital signal processor, DSP), an ASIC, an FPGA, another programmable logic device, a transistor logic device, a hardware part, or any combination thereof. The general-purpose processor may be a microprocessor or any regular processor.

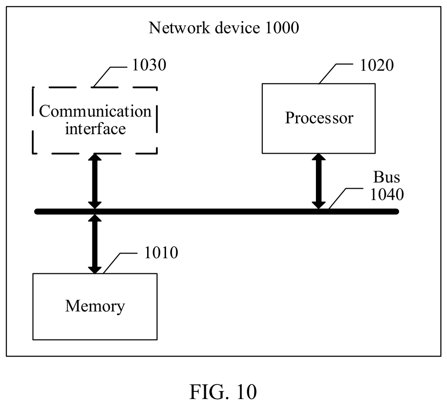

In addition, the registration apparatus 900 shown in FIG. 9 may alternatively be implemented by using a network device. FIG. 10 is a diagram of a structure of a network device according to this application. The network device 1000 includes a memory 1010 and at least one processor 1020. The processor 1020 may implement the registration method provided in the foregoing embodiments. The memory 1010 is configured to store software instructions corresponding to the foregoing registration method. In an optional implementation, in a hardware implementation, the network device 1000 may be a chip or a chip system in which one or more processors 1020 are packaged. For example, when the network device 1000 is configured to implement the method steps in the foregoing embodiments, the processor 1020 included in the network device 1000 performs the steps in the foregoing methods and possible substeps of the steps. In an optional case, the network device 1000 may further include a communication interface 1030, and the communication interface 1030 may be configured to receive and send data. For example, the communication interface 1030 is configured to: receive a ranging packet, send the ranging packet, or the like. The communication interface 1030 may be implemented by using an interface circuit included in the network device 1000.

In this embodiment of this application, the communication interface 1030, the processor 1020, and the memory 1010 may be connected through a bus 1040. The bus 1040 may be classified into an address bus, a data bus, a control bus, or the like. The bus 1040 may be a peripheral component interconnect express (Peripheral Component Interconnect Express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX) bus, or the like.

It should be noted that the network device 1000 may further perform a function of the registration apparatus 900 shown in FIG. 9. Details are not described herein again.

The network device 1000 provided in this embodiment may be any one of the foregoing ONUs, or another network device having a data processing function. This is not limited in this application. For example, the network device 1000 may be any one of the foregoing network devices, for example, the ONU 310, the main ONU, or any sub ONU.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

This application further provides a communication system. The communication system includes an optical fiber, a main network device, and at least one sub network device. The optical fiber is configured to connect the network devices. The network device may be the foregoing ONU.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium like a floppy disk, a hard disk, or a magnetic tape, may be an optical medium like a digital video disc (digital video disc, DVD), or may be a semiconductor medium like a solid-state drive (solid-state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A registration method for an optical communication network, wherein the method is performed by a second network device, and the method comprises:

   allocating, by the second network device, a registration identifier to a first network device, wherein the registration identifier has a correspondence with a serial number SN of the first network device, and the SN of the first network device is prestored in the second network device;
   sending, by the second network device, the SN of the first network device and the registration identifier to the first network device, and sending a first ranging request packet to the first network device; and
   receiving, by the second network device, a first ranging packet from the first network device, and sending a first response packet to the first network device, wherein the first ranging packet carries the registration identifier, and the first response packet indicates a first equalization delay to be used by the first network device in the optical communication network.

2. The method according to claim 1, wherein after sending, by the second network device, the first response packet to the first network device, if the first network device goes offline from the optical communication network, the method further comprises:

   receiving, by the second network device, a second ranging packet sent by the first network device, wherein the second ranging packet is a low-power optical signal that carries the registration identifier, and power of the low-power optical signal is less than or equal to a first threshold; and
   sending, by the second network device, a second response packet to the first network device in response to the second ranging packet, wherein the second response packet indicates a second equalization delay to be used by the first network device in the optical communication network.

3. The method according to claim 2, wherein sending, by the second network device, the second response packet to the first network device in response to the second ranging packet comprises:

   parsing, by the second network device, the second ranging packet to obtain the registration identifier; and
   sending, by the second network device, the second response packet to the first network device based on the registration identifier.

4. The method according to any one of claims 1 to 3, wherein after sending, by the second network device, the first response packet to the first network device, the method further comprises:

querying, by the second network device, locally stored status information, wherein the status information is used to record operating states of all network devices that have established optical communication connections to the second network device;

if the status information indicates that the first network device is in an abnormal state, sending a second ranging request packet to the first network device;

receiving, by the second network device, a third ranging packet that is sent by the first network device in response to the second ranging request packet, wherein the third ranging packet carries the registration identifier; and

sending, by the second network device, a third response packet to the first network device in response to the third ranging packet, wherein the third response packet indicates a third equalization delay to be used by the first network device in the optical communication network.

5. The method according to claim 4, wherein after sending, by the second network device, the second ranging request packet to the first network device, the method further comprises:

if the second network device does not receive the third ranging packet within reference time, sending alarm information, wherein

the reference time comprises at least one of maximum activation time of a ranging window or total slots corresponding to ranging window opening based on a quantity of reference times, and the ranging window is a quiet window opened by the second network device based on the third ranging request packet.

6. The method according to claim 4 or 5, wherein the third ranging packet is a low-power optical signal, and power of the low-power optical signal is less than or equal to a second threshold.

7. The method according to claim 4 or 5, wherein a wireless broadband Wi-Fi channel has been established between the second network device and the first network device, and the third ranging packet is an Ethernet packet transmitted through the Wi-Fi channel.

8. A registration method for an optical communication network, wherein the method is performed by a first network device, and the method comprises:

receiving, by the first network device, a serial number SN of the first network device, a registration identifier of the first network device, and a first ranging request packet that are sent by a second network device, wherein the registration identifier has a correspondence with the SN of the first network device, and the SN of the first network device is prestored in the second network device;

sending, by the first network device, a first ranging packet to the second network device in response to the first ranging request packet, wherein the first ranging packet comprises the registration identifier; and

receiving, by the first network device, a first response packet sent by the second network device, wherein the first response packet indicates a first equalization delay to be used by the first network device in the optical communication network.

9. The method according to claim 8, wherein if the first network device goes offline from the optical communication network, the method further comprises:

setting, by the first network device, a laser of the first network device to a low-power operating mode, wherein the low-power operating mode indicates that power of an optical signal emitted by the laser is less than or equal to a first threshold;

driving, by the first network device, the laser in the low-power operating mode to send a second ranging packet, wherein the second ranging packet carries the registration identifier; and

receiving, by the first network device, a second response packet sent by the second network device based on the second ranging packet, wherein the second response packet indicates a second equalization delay to be used by the first network device in the optical communication network.

10. The method according to claim 8 or 9, wherein a wireless broadband Wi-Fi channel has been established between the first network device and the second network device; and

if the first network device goes offline from the optical communication network, the method further comprises:

sending, by the first network device, a third ranging packet to the second network device through the Wi-Fi channel, wherein the third ranging packet carries the registration identifier; and

receiving, by the first network device, a third response packet sent by the second network device based on the third ranging packet, wherein the third response packet indicates a third equalization delay to be used by the first network device in the optical communication network.

11. A registration method for an optical communication network, wherein the method comprises:

allocating, by a second network device, a registration identifier to a first network device, wherein the registration identifier has a correspondence with a serial number SN of the first network device, and the SN of the first network device is prestored in the second network device; and sending, by the second network device, the SN of the first network device and the registration identifier to the first network device, and sending a first ranging request packet to the first network device;

sending, by the first network device, a first ranging packet to the second network device in response to the first ranging request packet, wherein the first ranging packet carries the registration identifier; and

sending, by the second network device, a first response packet to the first network device in response to the first ranging packet, wherein the first response packet indicates a first equalization delay to be used by the first network device in the optical communication network.

12. A registration apparatus, comprising a module configured to perform the method according to any one of claims 1 to 11.

13. A network device, comprising a processor, a memory, and a transceiver, wherein the memory is configured to store a serial number of a network device that is to go online on an optical communication network, and the processor is configured to perform, based on the serial number of the network device that is to go online, the method according to any one of claims 1 to 7 in collaboration with the transceiver.

14. A network device, comprising a processor and a transceiver, wherein the processor and the transceiver are configured to collaboratively perform the method according to any one of claims 8 to 10.

15. A communication system, comprising: an optical fiber, one network device according to claim 13, and one or more network devices according to claim 14, wherein the optical fiber is configured to connect the network devices.

**Optical communication network**

Terminal 111 Terminal 112 Terminal 113 Terminal 114 Terminal 115

Network device 124

Roof

Room 2

Network device 123

Room 1

Network device 121

Optical fiber

Network device 122

Server 130

FIG. 1

**PON 200**

**OLT 220**

Optical
splitter
230

Signal upstream
transmission direction

Signal

FIG. 2

FIG. 3

S410: Establish an optical communication connection

**Main ONU**

Sub ONU 3    Sub ONU 4

**Sub ONU 1**    Sub ONU 2

Without opening a discovery window

S420: Obtain a registration identifier of the sub ONU 1 based on prestored SNs of sub ONUs that are to go online

S430: Send an SN of the sub ONU 1, the registration identifier, and a ranging request packet 1

S440: Send a ranging packet 1

Ranging window

S450: Send a response packet 1

FIG. 4

S510: Establish an optical communication connection

**Main ONU**

Sub ONU 3    Sub ONU 4

**Sub ONU 1**    Sub ONU 2

Without opening a discovery window

S520: Send a ranging packet 2

Ranging window

S530: Send a response packet 2

FIG. 5

Optical communication
connection

Wi-Fi link 1 ← S620: Access ← Sub ONU 1

Main ONU → S610: Provide → Wi-Fi link 2

...

Wi-Fi link n

FIG. 6

$t3$

$t1$

$t2$

Service
signal

Time

$P$

$f$

Low-power
signal

Time

Optical power
(mW)

14

10

6

• **Off**

**On**

0

20    60    100

Bias current
(mA)

FIG. 7

Main ONU

S810: Establish an optical
communication connection

Sub ONU 3    Sub ONU 4

**Sub ONU 1**    Sub ONU 2

S820: Query stored status information, and
determine that a sub ONU that is to go online
is the sub ONU 1

S830: Send a ranging request packet 3

Without opening a
discovery window

S840: Send a ranging packet 3

Ranging
window

S850: Send a response packet 3

FIG. 8

Registration
apparatus 900

Transceiver
module 910

Processing
module 920

FIG. 9

Network device 1000

1030

Communication
interface

1020

Processor

Bus
1040

1010

Memory

FIG. 10

## INTERNATIONAL SEARCH REPORT

| International application No. |
|---|
| **PCT/CN2024/078121** |

| A. | CLASSIFICATION OF SUBJECT MATTER |
|---|---|
| | H04Q11/00(2006.01)i; H04B10/079(2013.01)i |

According to International Patent Classification (IPC) or to both national classification and IPC

| B. | FIELDS SEARCHED |
|---|---|

Minimum documentation searched (classification system followed by classification symbols)

    IPC:H04Q H04B

Documentation searched other than minimum documentation to the extent that such documents are included in the fields searched

Electronic data base consulted during the international search (name of data base and, where practicable, search terms used)

WPABSC; CNTXT; ENTXTC; VEN; DWPI; ENTTXT; CNKI; 3GPP: 光线路终端, 光网络单元, 光网络终端, 序列号, 标识, 分配, 配置, 发现, 静默, 安静, 测距, 均衡时延, 功率, 异常, 在线, 离线, 下线, 下挂, 掉电, OLT, ONU, ONT, SN, ID, allocate, configurate, discover, slient, ranging, eqd, power, anomaly, online, offline

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112511918 A (ZTE CORP.) 16 March 2021 (2021-03-16)<br>description, paragraphs [0006]-[0178] | 1, 8, 11-15 |
| A | CN 101674501 A (ZTE CORP.) 17 March 2010 (2010-03-17)<br>entire document | 1-15 |
| A | CN 111328055 A (CHINA MOBILE GROUP SHANDONG CO., LTD. et al.) 23 June 2020<br>(2020-06-23)<br>entire document | 1-15 |
| A | CN 113825043 A (CHINA TELECOM CORP., LTD.) 21 December 2021 (2021-12-21)<br>entire document | 1-15 |
| A | CN 102883234 A (ALCATEL-LUCENT SHANGHAI BELL CO., LTD.) 16 January 2013<br>(2013-01-16)<br>entire document | 1-15 |
| A | JP 2013207716 A (OKI ELECTRIC INDUSTRY CO., LTD.) 07 October 2013 (2013-10-07)<br>entire document | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 April 2024** | **01 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/078121**

| Patent document cited in search report | | | Publication date (day/month/year) | Patent family member(s) | | | Publication date (day/month/year) |
|---|---|---|---|---|---|---|---|
| CN | 112511918 | A | 16 March 2021 | WO | 2021179846 | A1 | 16 September 2021 |
| | | | | EP | 4117301 | A1 | 11 January 2023 |
| | | | | US | 2023144582 | A1 | 11 May 2023 |
| CN | 101674501 | A | 17 March 2010 | WO | 2011035602 | A1 | 31 March 2011 |
| | | | | CN | 101674501 | B | 03 April 2013 |
| CN | 111328055 | A | 23 June 2020 | CN | 111328055 | B | 09 December 2022 |
| CN | 113825043 | A | 21 December 2021 | CN | 102883234 | B | 06 January 2016 |
| CN | 102883234 | A | 16 January 2013 | CN | 102883234 | B | 06 January 2016 |
| JP | 2013207716 | A | 07 October 2013 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310893415